# EUROPEAN PATENT SPECIFICATION

(11) **EP 3 141 554 B1**
(45) Date of publication and mention of the grant of the patent: **03.01.2018**
(21) Application number: 16187391.4
(22) Date of filing: 06.09.2016
(51) Int. Cl.: C07F 7/10, C08G 77/26

(54) **SILICONE HAVING A BIS(TRIALKYLSILYL)AMINOPROPYL GROUP AT ONE TERMINAL**
SILIKON MIT EINEM BIS(TRIALKYLSILYL)AMINOPROPYL AN EINEM ENDELEMENT
SILICONE AYANT UN BIS (TRIALKYLSILYLE) AMINOPROPYL GROUPE AU NIVEAU D'UNE BORNE

(30) Priority: 11.09.2015 JP 2015179923
(43) Date of publication of application: 15.03.2017
(73) Proprietor: Shin-Etsu Chemical Co., Ltd., Chiyoda-ku, Tokyo 100-0004 (JP)
(72) Inventor: Ichinohe, Shoji, Annaka-shi, Gunma 379-0224 (JP); Kudo, Muneo, Annaka-shi, Gunma 379-0224 (JP)
(74) Representative: V.O.

(56) References cited:
- JP-A- H1 017 579
- JP-A- 2002 194 086
- PETERS M A ET AL: "Termination of Living Anionic Polymerizations Using Chlorosilane Derivatives: A General Synthetic Methodology for the Synthesis of End-Functionalized Polymers", JOURNAL OF THE AMERICAN CHEMICAL SOCIETY, AMERICAN CHEMICAL SOCIETY, US, vol. 117, no. 12, 1995, pages 3380-3388, XP002527934, ISSN: 0002-7863, DOI: 10.1021/JA00117A008

## Description

### FIELD OF THE INVENTION

The present invention relates to a silicone having a bis (trialkylsilyl) aminopropyl group at one terminal and a method for preparing the same.

One-terminal functionalized silicone compounds having a functional group such as a carbinol, carboxy, epoxy, methacryl and phenol groups are commercially available mainly as resin modifiers. However, a silicone compound having an amino group at one terminal is not commercialized.

Bis(trimethylsilyl)allylamine is known. For instance, Japanese Patent Application Laid-Open No. Hei-10-218883, Patent Literature 1, describes a method for preparing this compound, where bis(trimethylsilyl)allylamine is addition reacted with hydrotriethoxysilane to prepare an aminosilane coupling agent, or bis(trimethylsilyl)allylamine is addition reacted with dimethylethoxysilane and, then, hydrolyzed to prepare 1,3-bis(3-aminopropyl)-1,1,3,3-tetramethyldisiloxane.

### PRIOR LITERATURE

### [Patent Literature]

[Patent Literature 1] Japanese Patent Application Laid-Open No. Hei-10-2188 83.
Polysiloxanes terminating in a butylamino(bis(trimethylsilyl) group are known from "Journal of the Americal Chemical Society 1995, 117(12), 3380-3388";
JP2001194086 discloses organopolysiloxanes having aminoalkyl groups, which are not bis(silyl)-substituted though.
JPH 1017579 discloses N,N-Bis(trimethylsilyl)aminopropylsilanes, but not - siloxanes.

### DISCLOSURE OF THE INVENTION

### PROBLEMS TO BE SOLVED BY THE INVENTION

Patent Literature 1 describes a reaction of bis(trimethylsilyl)allylamine with an alkoxysilane, but does not describe any reaction of bis(trimethylsilyl)allylamine with a hydrogenpolysiloxane.

One of the purposes of the present invention is to provide a bis(trialkylsilyl)allylamine which reacts well with a hydrogenpolysiloxane with less side reactions which are not an addition reaction.

### MEANS TO SOLVE THE PROBLEMS

For the aforesaid purpose, the present inventors have made research and found that by the reaction of a polysiloxane having a hydrosilyl group at one terminal with bis(trialkylsilyl)allylamine the present compound is obtained with a high purity and a high yield.

Thus, the present invention provides a silicone having a bis(trialkylsilyl)aminopropyl group at one terminal and represented by the following general formula [II]:

R' R₂SiO (R₂SiO)ₘR₂SiC₃H₆N (SiR₃)₂ [II]

wherein m is an integer of from 1 to 200, R' is an alkyl group having 1 to 4 carbon atoms, and R is an alkyl group having 1 to 10 carbon atoms.

### EFFECTS OF THE INVENTION

All of the active hydrogen atoms of the amino group are replaced with trialkylsilyl groups in bis(trialkylsilyl)allylamine and, therefore, no side reaction occurs in addition to the addition reaction. Thus, the purity and the yield of the envisaged compound are very high. In contrast, when a monotrialkylsilylallylamine reacts with a polysiloxane having a hydrosilyl group at one terminal, a dehydrogenation reaction occurs between -NH and -SiH to thereby form an NSi bond and, therefore, the purity and the yield of the envisaged compound are lower.

### BRIEF EXPLANATION OF THE DRAWINGS

Figure 1 shows a chart of ¹H-NMR spectra of the compound prepared in Example 1.
Figure 2 shows a chart of GPC of the compound prepared in Example 2.

### BEST MODE OF THE INVENTION

The present invention will be described below in detail.

The present invention provides a silicone having a bis(trialkylsilyl)aminopropyl group at one terminal and represented by the following general formula [II]:

R'R₂SiO(R₂SiO)ₘR₂SiC₃H₆N(SiR₃)₂ [II]

In the formula [II], m is an integer of from 1 to 200, preferably 2 or more, more preferably 3 or more, preferably 150 or less, more preferably 80 or less. R' is an alkyl group having 1 to 4 carbon atoms, such as a methyl group, an ethyl group, a propyl group, an isopropyl group, a butyl group and a t-butyl group. R is a branched or linear alkyl group having 1 to 10 carbon atoms, and preferably a methyl, ethyl, propyl, butyl or pentyl group.

The bis(trialkylsilyl)aminopropyl silicone represented by the aforesaid general formula [II] is obtained by an addition reaction of a polysiloxane having a hydrosilyl group at one terminal and represented by the following general formula [I] with a bis (tri C_{1 to 10} alkylsilyl) allylamine, preferably in the presence of a hydrosilylation catalyst, particularly a platinum catalyst.

R'R₂SiO(R₂SiO)ₘR₂SiH [I]

wherein m, R' and R are as defined above.

The addition reaction may be carried out with or without a solvent, preferably with a solvent. Examples of the preferable solvent include aliphatic hydrocarbons such as hexane, methyl cyclohexane and ethylcyclohexane; aromatic hydrocarbons such as toluene and xylene; alcohols such as ethanol and isopropanol; esters such as ethyl acetate and butyl acetate; ethers such as dioxane, dibutyl ether and dimethoxyethane; ketones such as methylisobutylketone; and chlorine solvents such as chloroform. In particular, an aromatic hydrocarbon such as toluene is the most preferable. The amount of the solvent is not particularly limited and may be suitably decided.

The hydrosilylation catalyst may be noble metal catalysts, preferably platinum catalysts derived from chloroplatinic acid. If chlorine ions of chloroplatinic acid remain in the catalyst, the reaction mixture is in an acidic condition, so that a N-Si bond in bis(trialkylsilyl)allylamine is hydrolyzed. The NH bond generated in the hydrolyzation causes an increased dehydrogenation reaction. Therefore, it is preferred to use a platinum catalyst neutralized with sodium bicarbonate so as to make the reaction mixture neutral. It is preferred to completely neutralize chlorine ions with sodium bicarbonate to thereby increase stability of the platinum catalyst. For instance, a complex of chloroplatinic acid neutralized with sodium bicarbonate and 1,1,3,3-tetramethyl-1,3-divinyldisiloxane is most preferable as a catalyst.

The amount of the catalyst may be such that the addition reaction is sufficiently promoted. For instance, when a complex of chloroplatinic acid neutralized with sodium bicarbonate and 1,1,3,3-tetramethyl-1,3-divinyldisiloxane is used, the amount, reduced as a platinum metal, is 5 to 80 ppm by weight, relative to the weight of the siloxane having a hydrosilyl group at one terminal. If the amount of the catalyst is too small, the reaction speed is too slow and the addition reaction does not proceed well. Even if the amount of the catalyst is larger than the aforesaid amount, the reactivity is not particularly improved and, therefore, this is uneconomical.

The temperature of the addition reaction is not particularly limited and may be suitably decided. In particular, the reaction temperature is 20 to 150 degrees C, preferably 50 to 120 degrees C, further preferably 80 to 90 degrees C. All of the materials may be mixed and reacted in one step. More preferably, the polysiloxane having a hydrosilyl group at one terminal, a solvent such as toluene, and the hydrosilylation catalyst are placed in a reactor and, then, an excess amount of bis(tri C_{1 to 10} alkylsilyl)allylamine is added dropwise into the reactor to be reacted. The reaction time is, for instance, 1 to 12 hours, preferably from 3 hours to 8 hours.

The amount of bis (tri C_{1 to 10} alkylsilyl) allylamine to be reacted is preferably in molar excess, relative to the siloxane having a hydrosilyl group at one terminal. For instance, the amount is preferably 1.01 to 3 moles, further preferably 1.05 moles or more, particularly 1.1 moles or more, and further preferably 2 moles or less, particularly 1.5 moles or less, per mole of the siloxane having a hydrosilyl group at one terminal.

After completion of adding the bis (tri C_{1 to 10} alkylsilyl) allylamine, the reaction is continued, for instance, at 80 to 90 degrees C for 2 hours. Then, absence of unreacted one-terminal hydrosilyl group-containing siloxane is confirmed, for instance, by disappearance of a peak in gas chromatography (hereinafter sometimes abbreviated as "GC"). Then, the reaction solution is subjected to stripping to remove the solvent, such as toluene, and the excess amount of bis (tri C_{1 to 10} alkylsilyl) allylamine at an internal temperature of 130 degrees C to obtain a silicone having a bis (trialkylsilyl) aminopropyl group at one terminal and represented by the aforesaid general formula [II] with a high purity.

### EXAMPLES

The present invention will be explained below in further detail with reference to a series of Examples, although the present invention is in no way limited by these Examples.

In the following description, ¹H-NMR analysis was conducted with ECP500, ex JEOL Ltd, using deuterated acetone as a determination solvent.

The purity of the silicone having an amino group at one terminal was determined by gas chromatography (GC) in the following manner.
Detector: flame ionization detector (FID), provided by Agilent Technologies.
Capillary column: HP-5MS having dimensions of 0.25 mm x 30 m x 0.25 µm, provided by J & W

The column temperature was raised to 50 degrees C for 5 minutes, then, in a speed of 10 degrees C per minute to 250 degrees C and maintained at 250 degrees C.
Injection temperature: 250 degrees C; temperature of FID: 300 degrees
C Carrier gas: helium, 1.0 ml/ minute
Split ratio: 50:1; injection volume: 1 µl

In Example 2, the GPC determination was conducted in order to determine whether the siloxane bond of the compound obtained was cut or not. The GPC analysis was conducted with the following conditions . Measurement device: HLC-8220, provided by TOSOH Cop.

### [GPC conditions]

Column Temperature: 40 degrees C.
Flow rate: 0.6mL/min.
Mobile phase: tetrahydrofuran Columns:
TSK gel Super H2500(6.0×150)
TSK gel Super HM-N (6.0×150)

Guard column TSK gel guardcolumn Super H-H (4.6×35)
Injection volume: 50 µl
Concentration of a sample: 0.3 %
Detector: refractive index (RI)

In the following description, Bu is the abbreviation for a butyl group and Me is the abbreviation for a methyl group.

### [Example 1]

### Synthesis of compound [II]-1

The starting material is represented by the following formula [I].

R' R₂SiO (R₂SiO)ₘR₂SiH [I]

To a two-liter flask equipped with a stirrer, a dimroth condenser, a thermometer and a dropping funnel were added 412 g (1 mol) of polysiloxane having a hydrosilyl group at one terminal [I]-1 which is represented by the aforesaid general formula [I] wherein m is 3, R' is a butyl group and R is a methyl group, and 412 g of dehydrated toluene and, then, heated to 80 degrees C. 4.0 grams of a solution of complex catalyst of chloroplatinic acid neutralized with sodium bicarbonate and 1,1,3,3-tetramethyl-1,3-divinyldisiloxane in toluene, containing 0.5 % of platinum, were added to the flask, subsequently 241 g (1.2 mols) of bis(trimethylsilyl)allylamine was added dropwise from a dropping funnel for 1 hour at a temperature of the contents in the flask of 80 to 90 degrees C. Then, the reaction mixture was maintained at 80 to 90 degrees C for 2 hours. A sample of the reaction mixture was taken, to which an alkali was added to see if hydrogen gas generated. No hydrogen gas generated. This means that the polysiloxane having a hydrosilyl group at one terminal did not remain in the reaction mixture. Toluene and the excess amount of bis(trimethylsilyl)allylamine were evaporated at an internal temperature of 130 degrees C and a reduced pressure to obtain 603 g of a pale-yellow and transparent product.

The product obtained was analyzed by ¹H-NMR and was found to be a compound represented by the following formula [II]-1, having 0.98 mol with a yield of 98 %.

BuMe₂SiO (Me₂SiO)₃ Me₂SiC₃H₆N (SiMe₃)₂ [II]-1

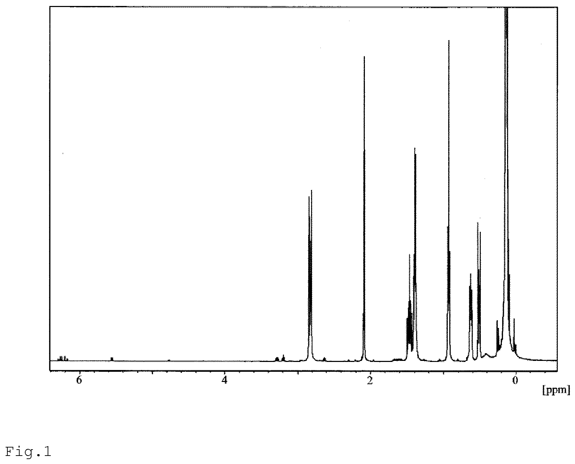

The purity of the compound represented by the formula [II]-1 determined by GC was 98.1 %. The chart of ¹H-NMR is as shown in Figure 1.

### [Example 2]

To a two-liter flask equipped with a stirrer, a dimroth condenser, a thermometer and a dropping funnel were added 482 g (0.2 mol) of polysiloxane having a hydrosilyl group at one terminal [I]-2, which is represented by the aforesaid general formula [I] wherein m is 30, R' is a butyl group and R is a methyl group, and 482 g of dehydrated toluene and then heated to 80 degrees C. 2.0 grams of a solution of complex catalyst of chloroplatinic acid neutralized with sodium bicarbonate and 1,1,3,3-tetramethyl-1,3-divinyldisiloxane in toluene, containing 0.5 % of platinum, were added to the flask, subsequently 48.2 g (0.24 mol) of bis (trimethylsilyl) allylamine was added dropwise from a dropping funnel for 1 hour at a temperature of the contents in the flask of 80 to 90 degrees C. Then, the reaction mixture was maintained at 80 to 90 degrees C for 2 hours. A sample of the reaction mixture was taken, to which an alkali was added to see if hydrogen gas generated. No hydrogen gas generated. This means that the polysiloxane having a hydrosilyl group at one terminal did not remain in the reaction mixture. Toluene and the excess amount of bis(trimethylsilyl)allylamine were evaporated at an internal temperature of 130 degrees C and a reduced pressure to obtain 470 g of a pale-yellow and transparent product.

The product obtained was analyzed by ¹H-NMR and was found to be a compound represented by the following formula [II]-2, having 0.18 mol with a yield of 90 %.

BuMe₂SiO(Me₂SiO)₃₀Me₂SiC₃H₆N(SiMe₃)₂ [II] -2

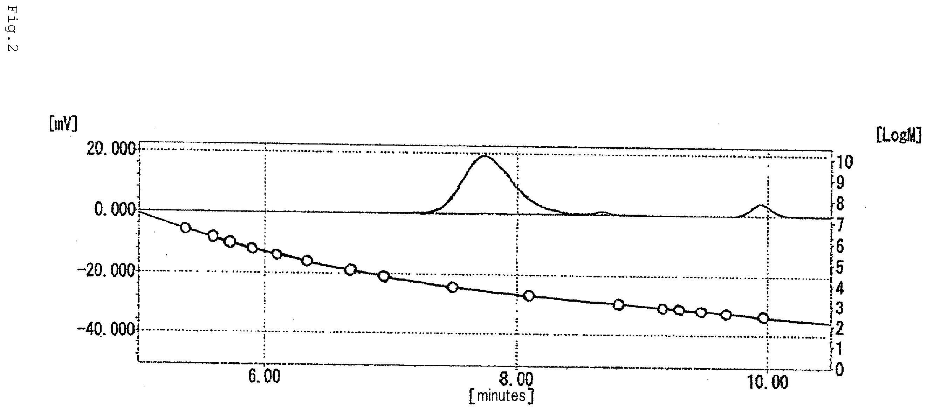

The GPC data is as shown in Figure 2. As shown in this data, the siloxane bonds of the compound obtained were not cut.

### INDUSTRIAL APPLICABILITY

The present invention provides a novel silicone having an amino group at one terminal. The compound is usable in the preparation of a silicone having an amino group at one terminal by reacting the compound with (meth) acryloyl chloride.

## Claims

1. A silicone having a bis(trialkylsilyl)aminopropyl group at one terminal and represented by the following general formula [II]:
R' R₂SiO(R₂SiO)ₘR₂SiC₃H₆N(SiR₃)₂ [II]
wherein m is an integer of from 1 to 200, R' is an alkyl group having 1 to 4 carbon atoms, and R is an alkyl group having 1 to 10 carbon atoms.

2. The silicone according to claim 1, wherein m is an integer of from 2 to 80, R' is selected from the group consisting of a methyl group, an ethyl group, a propyl group and a butyl group, and R is selected from the group consisting of a methyl group, an ethyl group, a propyl group, a butyl group and a pentyl group.

3. A method for preparing a silicone having a bis(trialkylsilyl)aminopropyl group at one terminal and represented by the following general formula [II]:
R'R₂SiO(R₂SiO)ₘR₂SiC₃H₆N(SiR₃)₂ [II]
wherein m is an integer of from 1 to 200, R' is an alkyl group having 1 to 4 carbon atoms, and R is an alkyl group having 1 to 10 carbon atoms,
comprising a step of addition reacting a polysiloxane having a hydrosilyl group at one terminal and represented by the following general formula [I]:
R'R₂SiO(R₂SiO)ₘR₂SiH [I]
wherein m, R' and R are as defined above,
with bis(tri C_{1 to 10} alkylsilyl)allylamine to thereby prepare said silicone having a bis(trialkylsilyl)aminopropyl group at one terminal.

4. The method according to claim 3, wherein m is an integer of from 2 to 80, R' is selected from the group consisting of a methyl group, an ethyl group, a propyl group and a butyl group, and R is selected from the group consisting of a methyl group, an ethyl group, a propyl group, a butyl group and a pentyl group.

## Patentansprüche

1. Silikon mit einer Bis(trialkylsilyl)aminopropylgruppe an einem Ende und dargestellt durch die folgende allgemeine Formel [II]:
R'R₂SiO(R₂SiO)ₘR₂SiC₃H₆N(SiR₃)₂ [II],
wobei m eine ganze Zahl von 1 bis 200 ist, R' eine Alkylgruppe mit 1 bis 4 Kohlenstoffatomen ist, und R eine Alkylgruppe mit 1 bis 10 Kohlenstoffatomen ist.

2. Silikon gemäß Anspruch 1, wobei m eine ganze Zahl von 2 bis 80 ist, R' ausgewählt ist aus der Gruppe bestehend aus einer Methylgrupppe, einer Ethylgruppe, einer Propylgruppe und einer Butylgruppe, und R ausgewählt ist aus der Gruppe bestehend aus einer Methylgrupppe, einer Ethylgruppe, einer Propylgruppe, einer Butylgruppe und einer Pentylgruppe.

3. Verfahren zum Herstellen eines Silikons mit einer Bis(trialkylsilyl)aminopropylgruppe an einem Ende and dargestellt durch die folgende allgemeine Formel [II]:
R'R₂SiO(R₂SiO)ₘR₂SiC₃H₆N(SiR₃)₂ [II],
wobei m eine ganze Zahl von 1 bis 200 ist, R' eine Alkylgruppe mit 1 bis 4 Kohlenstoffatomen ist, und R eine Alkylgruppe mit 1 bis 10 Kohlenstoffatomen ist,
umfassend einen Schritt von Additionsreagieren eines Polysiloxans mit einer Hydrosilylgruppe an einem Ende and dargestellt durch die folgende allgemeine Formel [I]:
R'R₂SiO(R₂SiO)ₘR₂SiH [I],
wobei m, R' und R wie vorstehend definiert sind,
mit Bis (tri C_{1 bis 10}-alkylsilyl)allylamin, um dadurch das Silikon mit einer Bis(trialkylsilyl)aminopropylgruppe an einem Ende herzustellen.

4. Verfahren gemäß Anspruch 3, wobei m eine ganze Zahl von 2 bis 80 ist, R' ausgewählt ist aus der Gruppe bestehend aus einer Methylgrupppe, einer Ethylgruppe, einer Propylgruppe und einer Butylgruppe, und R ausgewählt ist aus der Gruppe bestehend aus einer Methylgrupppe, einer Ethylgruppe, einer Propylgruppe, einer Butylgruppe und einer Pentylgruppe.

## Revendications

1. Silicone ayant un groupe bis(trialkylsilyl)amino-propyle à une de ses extrémités et représentée par la formule générale [II] suivante :
R'R₂SiO(R₂SiO)ₘR₂SiC₃H₆N(SiR₃)₂ [II]
où m est un entier de 1 à 200, R' est un groupe alkyle ayant de 1 à 4 atomes de carbone, et R est un groupe alkyle ayant de 1 à 10 atomes de carbone.

2. Silicone selon la revendication 1, dans laquelle m est un entier de 2 à 80, R' est choisi dans le groupe constitué par un groupe méthyle, un groupe éthyle, un groupe propyle et un groupe butyle, et R est choisi dans le groupe constitué par un groupe méthyle, un groupe éthyle, un groupe propyle, un groupe butyle et un groupe pentyle.

3. Procédé de préparation d'une silicone ayant un groupe bis(trialkylsilyl)aminopropyle à une de ses extrémités et représentée par la formule générale [II] suivante :
R'R₂SiO(R₂SiO)ₘR₂SiC₃H₆N(SiR₃)₂ [II]
où m est un entier de 1 à 200, R' est un groupe alkyle ayant de 1 à 4 atomes de carbone, et R est un groupe alkyle ayant de 1 à 10 atomes de carbone,
comprenant une étape de réaction d'addition d'un polysiloxane ayant un groupe hydrosilyle à une de ses extrémités et représenté par la formule générale [I] suivante :
R'R₂SiO(R₂SiO)ₘR₂SiH [I]
où m, R' et R sont tels que définis ci-dessus,
avec une bis (trialkyl (C₁ à C₁₀) silyl)allylamine pour préparer ainsi ladite silicone ayant un groupe bis(trialkylsilyl)-aminopropyle à une de ses extrémités.

4. Procédé selon la revendication 3, dans lequel m est un entier de 2 à 80, R' est choisi dans le groupe constitué par un groupe méthyle, un groupe éthyle, un groupe propyle et un groupe butyle, et R est choisi dans le groupe constitué par un groupe méthyle, un groupe éthyle, un groupe propyle, un groupe butyle et un groupe pentyle.
